# EUROPEAN PATENT APPLICATION

(11) **EP 3 572 998 A1**
(43) Date of publication of application: **27.11.2019**
(21) Application number: 19175872.1
(22) Date of filing: 22.05.2019
(51) Int. Cl.: G06Q 20/20, G07F 7/08, G07F 13/02, H04W 4/02, G06Q 50/06, B67D 7/04

(54) **MANAGEMENT AND CONTROL SYSTEM FOR A FUEL DISTRIBUTION APPARATUS**

(30) Priority: 23.05.2018 IT 201800005609
(71) Applicant: Kuwait Petroleum Italia S.p.A., 00144 Roma (IT)
(72) Inventor: DI COSTANZO, Giuseppe, 00189 Roma (IT); MANIACI, Vincenzo, 00149 Roma (IT)
(74) Representative: Modiano, Micaela Nadia

(57) **Abstract**

A management and control system (10) for a fuel distribution apparatus, comprising a local processing device (12) and a set of apparatus devices (14, 16, 18, 20) which are mutually connected by means of a local telematic communication network (26); the local processing device (12) comprises a first virtual machine (32) that is configured to control the apparatus devices (14, 16, 18, 20) and to collect and store data originated from the apparatus devices (14, 16, 18, 20), and a second virtual machine (40) that is configured to transmit continuously the collected data toward a remote processing device (24) connected to the local processing device (12) by means of a geographical telematic communication network (28), the remote processing device (24) being configured to receive, store and analyze the collected data.

## Description

The present invention relates to a management and control system for a fuel distribution apparatus particularly, although not exclusively, useful and practical in the field of the process of remote management and control of a plurality of roadside fuel distribution apparatuses by the operations center of an oil company that owns and manages said plurality of apparatuses.

A fuel distribution apparatus, also commonly known as refueling station or service station, is a complex infrastructure typically arranged along a public road and constituted by a set of devices aimed at dispensing fuel for the refueling of vehicles circulating on the road.

Currently, fuel distribution apparatuses are known which comprise, and are controlled by, a station computer that acts as a so-called site controller, configured to manage the information and data related to the consumption and availability of fuel at the apparatus, as well as the information and data related to payments made by the customers at the apparatus, in practice performing also the cash register functions.

This station computer is not connected to and in direct communication with the operations center of the oil company that owns and manages the fuel distribution apparatus with which the station computer is associated. Therefore, the information and data related to the activities of the fuel distribution apparatus (such as for example daily quantities of fuel dispensed, quantities of available fuel, daily takings, and so forth) are transmitted periodically and on a regular basis to the company that supplies the station computer of the apparatus, particularly the corresponding hardware and software, which subsequently sends them to the oil company.

In particular, the station computer is configured by means of proprietary software and is connected to a local telematic communication network, such as for example a LAN (Local Area Network) network, arranged in the fuel distribution apparatus and comprising network devices of the switch type or of the peripheral switch type (serial communication), for connecting the devices of the fuel distribution apparatus.

Typically, these devices, which are comprised in the fuel distribution apparatus, comprise: at least one fuel dispenser (serial communication); at least one fuel tank level gauge, also known as tank gauge (serial communication); at least one indoor payment terminal, for payments of refuelings by means of electronic payment cards or codes; and at least one outdoor payment terminal, for payments of refuelings when no operators are present at the apparatus.

As mentioned, these apparatus devices are mutually connected by means of the local telematic communication network of the fuel distribution apparatus, and to the company providing the station computer of the apparatus itself by means of a geographic telematic communication network, such as for example an MPLS/APN (Multiprotocol Label Switching / Access Point Name) network.

However, these known solutions are not free from drawbacks, which include the fact that the oil company that owns and manages the fuel distribution apparatus receives indirectly, periodically and most of all with a consequent delay, the information and data related to the activities of the fuel distribution apparatus from the supplier.

Another drawback of known solutions resides in that the maintenance process of a known fuel distribution apparatus, particularly of the corresponding station computer, is particularly onerous and not flexible in practice, since each update of the software or replacement of the hardware of one of the devices requires the intervention of at least one maintenance operator directly at the site of the apparatus.

Moreover, a drawback of known solutions resides in that in general it is not possible for the oil company to intervene directly and remotely on the station computer of the fuel distribution apparatus, although it is its owner and manager.

The aim of the present invention is to overcome the limitations of the background art described above, devising a management and control system for a fuel distribution apparatus that allows to obtain higher efficiency levels than those obtainable with the known solutions and/or similar efficiency levels at a lower cost.

Within the scope of this aim, an object of the present invention is to conceive a management and control system for a fuel distribution apparatus that allows an integrated and centralized management of a plurality of fuel distribution apparatuses owned by a same oil company.

Another object of the present invention is to devise a management and control system for a fuel distribution apparatus that allows the direct and real-time transmission of the information and data related to the activities of the fuel distribution apparatus to the oil company that owns and manages the latter.

A further object of the present invention is to conceive a management and control system for a fuel distribution apparatus that allows, as far as possible, the remote maintenance and updating of the fuel distribution apparatus.

Moreover, an object of the present invention is to devise a management and control system for a fuel distribution apparatus that allows the oil company that owns and manages the fuel distribution apparatus to intervene directly and remotely on the station computer thereof.

Another object of the present invention is to devise a management and control system for a fuel distribution apparatus that is highly reliable, relatively easy to provide and at competitive costs if compared with the background art.

This aim and these and other objects which will become better apparent hereinafter are achieved by a management and control system for a fuel distribution apparatus, comprising a local processing device and a set of apparatus devices which are mutually connected by means of a local telematic communication network, said set of apparatus devices comprising at least one fuel dispenser, at least one tank gauge, at least one indoor payment terminal and at least one outdoor payment terminal, characterized in that said local processing device comprises a first virtual machine that is configured to control said apparatus devices and to collect and store data originated from said apparatus devices, and a second virtual machine that is configured to transmit continuously said collected data towards a remote processing device connected to said local processing device by means of a geographical telematic communication network, said remote processing device being configured to receive, store and analyze said collected data.

Further characteristics and advantages of the invention will become better apparent from the description of a preferred but not exclusive embodiment of the management and control system for a fuel distribution apparatus according to the invention, illustrated by way of non-limiting example with the aid of the accompanying drawings, wherein:

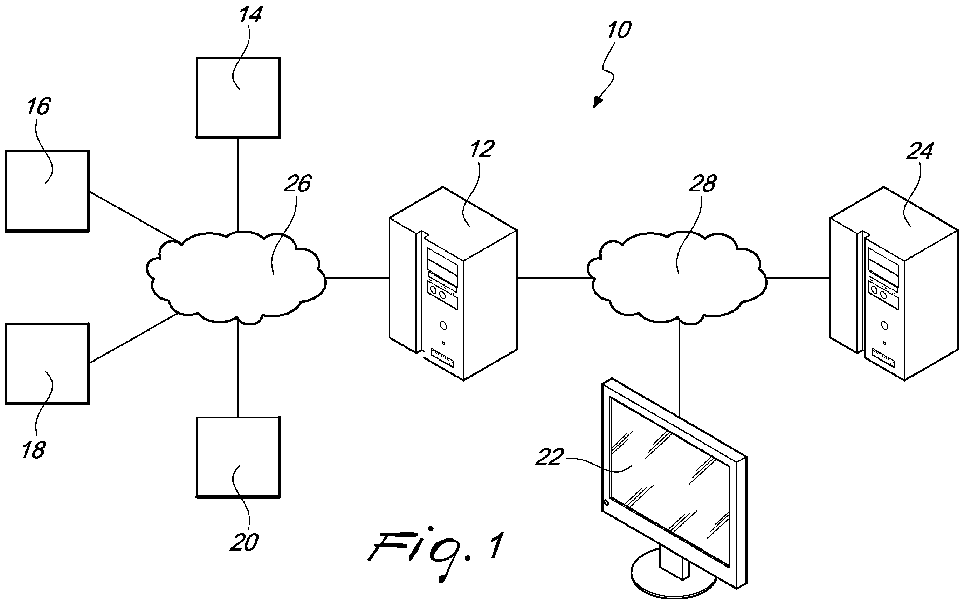

Figure 1 is a block diagram that shows schematically an embodiment of the management and control system for a fuel distribution apparatus, according to the present invention;

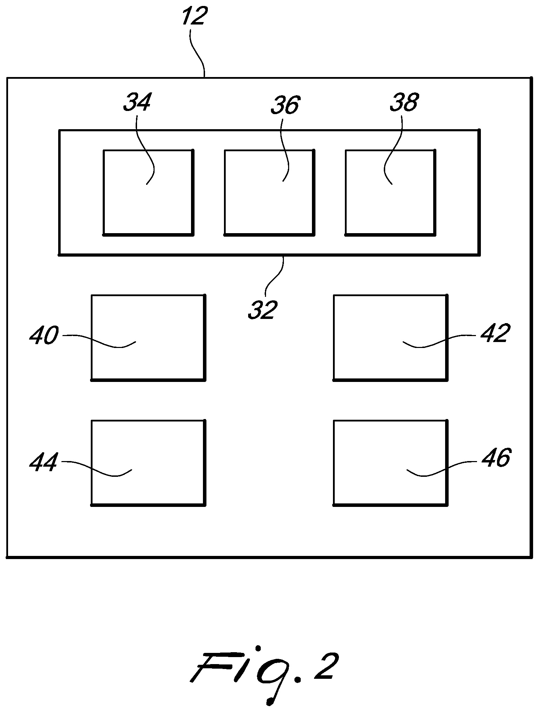

Figure 2 is a block diagram that shows schematically an embodiment of the local processing device of a management and control system for a fuel distribution apparatus, according to the present invention.

With reference to the figures, the management and control system for a fuel distribution apparatus according to the invention, generally designated by the reference numeral 10, comprises substantially a local processing device 12 (in short local computer 12), at least one fuel dispenser 14, at least one fuel tank level gauge 16 (in short, tank gauge 16), at least one indoor payment terminal 18, for payments of refuelings by means of electronic payment cards or codes, and at least one outdoor payment terminal 20, for payments of refuelings when no operators are present at the apparatus.

The devices listed above, arranged at the fuel distribution apparatus, are mutually connected via a local telematic communication network 26, such as for example a LAN (Local Area Network) network.

The local processing device 12 is arranged at the fuel distribution apparatus. In practice, the local computer 12 is a server configured by means of a virtualization software and comprising virtual machines.

Generally, the term "virtualization" refers to the possibility to abstract the hardware components, i.e., the physical components, of a computer in order to make them available to the software in the form of a virtual resource. By virtue of this process it is thus possible to install operating systems and applications on virtual hardware. The set of virtual hardware components takes the name of virtual machine and software such as, specifically, the operating systems and the corresponding applications can be installed thereon.

The local processing device 12 comprises a first virtual machine 32 configured to control the apparatus devices, i.e., the fuel dispenser 14, the tank gauge 16, the indoor payment terminal 18, and the outdoor payment terminal 20.

The first virtual machine 32 of the local computer 12 is further configured to collect and store data originated by the apparatus devices, i.e., the fuel dispenser 14, the tank gauge 16, the indoor payment terminal 18, and the outdoor payment terminal 20.

The first virtual machine 32 of the local computer 12 comprises a dispenser management module 34 configured to control the fuel dispenser 14 of the fuel distribution apparatus and to collect data originated from said fuel dispenser 14, such as for example the quantity of fuel of each single dispensing or the daily, weekly or monthly dispensed fuel quantities.

The first virtual machine 32 of the local computer 12 comprises a tank management module 36 configured to control the tank gauge 16 of the fuel distribution apparatus and to collect data originated from said tank gauge 16, such as for example the quantity of fuel currently available.

The first virtual machine 32 of the local computer 12 comprises a payment management module 38 configured to control the indoor payment terminal 18 and the outdoor payment terminal 20 of the fuel distribution apparatus and to collect the data that originate from said indoor and outdoor payment terminals 18 and 20, such as for example the takings of each individual dispensing or the daily, weekly or monthly takings.

The local processing device 12 further comprises a second virtual machine 40 that is configured to transmit continuously, i.e., in real time, the data collected previously toward a remote processing device 24, which will be described in the following description.

In an embodiment of the management and control system 10 for a fuel distribution apparatus according to the invention, the second virtual machine 40 of the local computer 12 is further configured to make available externally an access to the local computer 12, particularly to the corresponding resources, for example for sharing the data collected and stored by the first virtual machine 32.

The local processing device 12 comprises a control unit, transceiver means and data storage means (not shown).

The control unit is the main functional element of the local computer 12, and for this reason it is connected to and in communication with the other elements comprised in the local computer 12.

The control unit of the local computer 12 is provided with appropriate capabilities for calculating and interfacing with the other elements of the local computer 12, and is configured for controlling, monitoring and coordinating the operation of the elements of the local computer 12 to which it is connected and with which it is in communication.

The transceiver means of the local computer 12 are adapted to receive, via the local telematic communication network 26, both the data that arrive from the fuel dispenser 14 and from the tank gauge 16 of the fuel distribution apparatus, and the data that arrive from the indoor and outdoor payment terminals 18 and 20 related to the payments made by the customers at the fuel distribution apparatus. The transceiver means of the local computer 12 are further adapted to transmit said data toward the remote computer 24, by means of the geographical telematic communication network 28.

The data storage means of the local computer 12, such as for example a database stored on appropriately sized memory media, are configured to store locally both the data that arrive from the fuel dispenser 14 and from the tank gauge 16 of the fuel distribution apparatus, and the data that arrive from the indoor and outdoor payment terminals 18 and 20 related to the payments made by the customers at the fuel distribution apparatus.

In one embodiment of the management and control system 10 for a fuel distribution apparatus according to the invention, the local processing device 12 further comprises a third virtual machine 42 configured to act as a virtual firewall router, i.e., a system with functionalities for protection against computer attacks that implements sophisticated IT Networking & Security technologies.

In one embodiment of the management and control system 10 for a fuel distribution apparatus according to the invention, the local processing device 12 further comprises a fourth virtual machine 44 configured to act as a control center of a video surveillance system installed at the fuel distribution apparatus, for example by controlling the orientation of the cameras, the recording and storage of the acquired video content, and so forth.

In one embodiment of the management and control system 10 for a fuel distribution apparatus according to the invention, the local processing device 12 further comprises a fifth virtual machine 46 configured to act as a processing center of a video proactivity system (video content analytics or video content analysis system), automatically analyzing the video content acquired by a video surveillance system installed at the fuel distribution apparatus in order to detect and determine time-related and/or spatial events, in order to extract a series of useful information items in order to simplify the subsequent human analysis and/or activation.

The management and control system 10 for a fuel distribution apparatus according to the invention further comprises a remote processing device 24 (in short remote computer 24), connected to the local processing device 12 via a geographical telematic communication network 28, such as for example an MPLS/APN (Multiprotocol Label Switching / Access Point Name) network.

The remote processing device 24 is operated by the oil companies that own and manage the fuel distribution apparatus.

The remote processing device 24 is configured to receive, store and analyze the data collected by the first virtual machine 32 of the local computer 12 and originating from it, i.e., data originated from the fuel dispenser 14 and from the tank gauge 16 of the fuel distribution apparatus, and the data originated from the indoor and outdoor payment terminals 18 and 20 related to the payments made by the customers at the fuel distribution apparatus. By way of example, the analysis of said data performed by the remote processing device 24 allows to generate alarms related to the performance of the fuel distribution apparatus, for example based on preset conditions, so as to correlate them and provide orientation for the checks to solve any problems.

In one embodiment of the management and control system 10 for a fuel distribution apparatus according to the invention, the remote processing device 24 is further configured to reconfigure, i.e., update, the local processing device 12. In particular, the remote processing device 24 is configured to reconfigure, i.e., update, globally or individually the virtual machines 32, 40, 42, 44 and 46 comprised in the local processing device 12.

In one embodiment of the management and control system 10 for a fuel distribution apparatus according to the invention, the remote processing device 24 is further configured to store and restore the current configuration of the local processing device 12. In particular, the remote processing device 24 is configured to store globally or singularly the current configuration of the virtual machines 32, 40, 42, 44 and 46 comprised in the local computer 12.

The remote processing device 24 comprises a control unit, transceiver means and data storage means (not shown).

The control unit is the main functional element of the remote computer 24, and for this reason it is connected to and in communication with the other elements comprised in the remote computer 24.

The control unit of the remote computer 24 is provided with appropriate capabilities for calculation and interfacing with the other elements of the remote computer 24, and is configured to control, monitor and coordinate the operation of the elements of the remote computer 24 to which it is connected and with which it is in communication.

The transceiver means of the remote computer 24 are adapted to receive, by means of the geographical telematic communication network 28, both the data of the fuel dispenser 14 and of the tank gauge 16 of the fuel distribution apparatus, and the data of the indoor and outdoor payment terminals 18 and 20 related to the payments made by the customers at the fuel distribution apparatus, originating from the local computer 12.

The data storage means of the remote computer 24, such as for example a database stored on appropriately sized memory media, are configured to store remotely both the data of the fuel dispenser 14 and of the tank gauge 16 of the fuel distribution apparatus, and the data of the indoor and outdoor payment terminals 18 and 20 related to the payments made by the customers at the fuel distribution apparatus.

In one preferred embodiment of the invention, the management and control system 10 for a fuel distribution apparatus comprises a thin client device 22 connected both to the local processing device 12 and to the remote processing device 24, by means of the geographical telematic communication network 28.

The thin client device 22 is configured to access remotely the local computer 12, in particular its resources, for example for viewing the data collected and stored by the first virtual machine 32 and shared by the second virtual machine 40, and/or the remote computer 24, particularly to its resources, for example for viewing the results of the analyses performed by the latter on data originated from the apparatus devices 14, 16, 18 and 20 and from the local computer 12.

In practice it has been found that the invention fully achieves the intended aim and objects. In particular, it has been shown that the management and control system for a fuel distribution apparatus thus conceived allows to overcome the quality limitations of the background art, since it allows to achieve higher efficiency levels than those obtainable with known solutions and/or similar efficiency levels at a lower cost.

One advantage of the management and control system for a fuel distribution apparatus according to the present invention resides in that it allows an integrated and centralized management of a plurality of fuel distribution apparatuses owned by a same oil company.

Another advantage of the management and control system for a fuel distribution apparatus according to the present invention resides in that it allows the direct and real-time transmission of the information and data related to the activities of the fuel distribution apparatus toward the oil company that owns and manages the latter.

An additional advantage of the management and control system for a fuel distribution apparatus according to the present invention resides in that it allows, as much as possible, remote maintenance and updating of the fuel distribution apparatus.

Another advantage of the management and control system for a fuel distribution apparatus according to the present invention resides in that it allows the oil company that owns and manages the fuel distribution apparatus to directly and remotely intervene on the local processing device thereof, for example by providing applications or services not offered by the company that supplies the station computer of the apparatus.

Although the management and control system for a fuel distribution apparatus according to the invention has been conceived particularly for the remote management and control of a plurality of roadside fuel distribution apparatuses by the operations center of an oil company that owns and manages said plurality of apparatuses, it may be used in any vase, more generally, for the remote management and control of at least one fuel distribution apparatus by any entity, be it a company, a physical person or a group of physical persons.

The invention thus conceived is susceptible of numerous modifications and variations, all of which are within the scope of the appended claims. All the details may furthermore be replaced with other technically equivalent elements.

In practice, the materials used, so long as they are compatible with the specific use, as well as the contingent shapes and dimensions, may be any according to the requirements and the state of the art.

To conclude, the scope of the protection of the claims must not be limited by the illustrations or by the preferred embodiments illustrated in the description as examples, but rather the claims must comprise all the characteristics of patentable novelty that reside in the present invention, including all the characteristics that would be treated as equivalents by the person skilled in the art.

The disclosures in Italian Patent Application no. 102018000005609, from which this application claims priority, are incorporated by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A management and control system (10) for a fuel distribution apparatus, comprising a local processing device (12) and a set of apparatus devices (14, 16, 18, 20) which are mutually connected by means of a local telematic communication network (26), said set of apparatus devices comprising at least one fuel dispenser (14), at least one tank gauge (16), at least one indoor payment terminal (18) and at least one outdoor payment terminal (20), said system (10) being **characterized in that** said local processing device (12) comprises a first virtual machine (32) that is configured to control said apparatus devices (14, 16, 18, 20) and to collect and store data originated from said apparatus devices (14, 16, 18, 20), and a second virtual machine (40) that is configured to transmit continuously said collected data toward a remote processing device (24) connected to said local processing device (12) by means of a geographical telematic communication network (28), said remote processing device (24) being configured to receive, store and analyze said collected data.

2. The management and control system (10) for a fuel distribution apparatus according to claim 1, **characterized in that** said first virtual machine (32) of said local processing device (12) comprises a dispenser management module (34) that is configured to control said fuel dispenser (14) and to collect data that originated from said fuel dispenser (14).

3. The management and control system (10) for a fuel distribution apparatus according to claim 1 or 2, **characterized in that** said first virtual machine (32) of said local processing device (12) comprises a tank management module (36) that is configured to control said tank gauge (16) and to collect data originated from said tank gauge (16).

4. The management and control system (10) for a fuel distribution apparatus according to any one of the preceding claims, **characterized in that** said first virtual machine (32) of said local processing device (12) comprises a payment management module (38) configured to control said indoor payment terminal (18) and said outdoor payment terminal (20) and to collect data originated from said indoor payment terminal (18) and said outdoor payment terminal (20).

5. The management and control system (10) for a fuel distribution apparatus according to any one of the preceding claims, **characterized in that** said second virtual machine (40) of said local processing device (12) is further configured to make available externally an access to said local processing device (12).

6. The management and control system (10) for a fuel distribution apparatus according to any one of the preceding claims, **characterized in that** it further comprises a thin client device (22), which is connected both to said local processing device (12) and to said remote processing device (24), by means of said geographical telematic communication network (28), and is configured to access remotely said local processing device (12) and/or said remote processing device (24).

7. The management and control system (10) for a fuel distribution apparatus according to any one of the preceding claims, **characterized in that** said local processing device (12) further comprises a third virtual machine (42) configured to act as a virtual firewall router.

8. The management and control system (10) for a fuel distribution apparatus according to any one of the preceding claims, **characterized in that** said local processing device (12) further comprises a fourth virtual machine (44) configured to act as a control center of a video surveillance system installed at said fuel distribution apparatus.

9. The management and control system (10) for a fuel distribution apparatus according to any one of the preceding claims, **characterized in that** said local processing device (12) further comprises a fifth virtual machine (46) configured to act as a processing center of a video proactivity system, automatically analyzing video content in order to detect and determine time-related and/or spatial events.

10. The management and control system (10) for a fuel distribution apparatus according to any one of the preceding claims, **characterized in that** said remote processing device (24) is further configured to reconfigure, or update, said local processing device (12) and said virtual machines (32, 40, 42, 44, 46) comprised in said local processing device (12).

11. The management and control system (10) for a fuel distribution apparatus according to any one of the preceding claims, **characterized in that** said remote processing device (24) is further configured to store and restore the current configuration of said local processing device (12) and of said virtual machines (32, 40, 42, 44, 46) comprised in said local processing device (12).
